# EUROPÄISCHE PATENTANMELDUNG

(11) **EP 0 652 135 A1**
(43) Veröffentlichungstag der Anmeldung: **10.05.1995**
(21) Anmeldenummer: 94113749.9
(22) Anmeldetag: 02.09.1994
(51) Int. Cl.: B60R 1/06

(54) **Kraftfahrzeug-Aussenrückspiegel**

(30) Priorität: 05.11.1993 DE 4337750
(71) Anmelder: ROBERT BOSCH GMBH, 70442 Stuttgart (DE)
(72) Erfinder: Lott, Thomas, Dipl.-Ing. (FH), D-77815 Bühl (DE); Dilger, Werner, D-77815 Bühl (DE); Dreier, Friedrich-Wilhelm, Dipl.-Ing., D-76547 Sinzheim (DE)

(57) **Zusammenfassung**

Es wird ein Kraftfahrzeug-Außenrückspiegel vorgeschlagen, der zum Beobachten des hinter dem Fahrzeug befindlichen Geländes dient. Der Kraftfahrzeug-Außenrückspiegel umfaßt ein karosseriefestes Fußteil, an dem ein Spiegelträger gelenkig angeordnet ist, der frei um diese zur Spiegelebene im wesentlichen parallele, aufrechte Gelenkachse klappbar der Fahrzeugkarosserie annäherbar und von dieser entfernbar ist. Der Kraftfahrzeug-Außenrückspiegel hat eine elektromotorische, ein Untersetzungsgetriebe aufweisende Antriebsvorrichtung zum Erzeugen der Klappbewegung des Spiegelträgers, der über Kupplungsmittel mit der Antriebsvorrichtung wirkverbunden ist, welche bei einer von außen auf den Spiegelträger im Sinne einer der Klappbewegungen einwirkenden Kraft außer Eintritt gelangen, wobei die als bolzenartiges Bauteil ausgebildetes Gelenkachse ein mit dem Bauteil drehfest verbundenes Stützelement sowie das Fußteil und den Ansatz durchdringt und auf der von dem Fußteil abgewandten Seite des Ansatzes ein Zahnrad frei drehbar gelagert ist, dessen Verzahnung mit einer Gegenverzahnung kämmt, die von einem am Ansatz angeordneten elektrischen Antriebsmotor angetrieben ist. Damit der Kraftfahrzeug-Außenrückspiegel nach einer gewaltsamen, von außen hervorgerufenen Sicherheitsklappbewegung, die in einer anderen Ebene erfolgt als die normalerweise beabsichtigte elektromotorische Klappbewegung - der Rückspiegel alleine durch eine Betätigung der Antriebsvorrichtung wieder in seine Grundstellung gelangen kann, ist auf der von dem Ansatz abgewandten Stirnseite des Zahnrades ein von dem Bauteil durchdrungener, mit diesem drehfest verbundener Ring angeordnet ist, der durch vorgespannte Federmittel gegen das Zahnrad gedrückt ist und der Ring wenigstens einen Mitnahmevorsprung aufweist, der passend in eine Mitnahmeeinsenkung des Zahnrades greift.

## Beschreibung

### Stand der Technik

Die Erfindung geht aus von einem Kraftfahrzeug-Außenrückspiegel nach der Gattung des Hauptanspruchs. Es ist schon ein solcher Kraftfahrzeug-Außenrückspiegel bekannt (DE-PS 40 23 375), bei dem der Spiegelträger manuell wieder in seine Grundstellung gebracht werden muß, wenn er durch eine von außen auf den Rückspiegel einwirkende Kraft aus dieser verstellt worden ist.

### Vorteile der Erfindung

Der erfindungsgemäße Kraftfahrzeug-Äußenrückspiegel mit den kennzeichenden Merkmalen des Hauptanspruchs hat demgegenüber den Vorteil, daß alleine die Betätigung der Antriebsvorrichtung ausreicht, um den beispielsweise mutwillig verstellten Spiegelträger wieder in seine Grundstellung zu überführen, weil der Spiegelträger bei dieser Verstellung zwischen Ring und Zahnrad entkoppelt wird. Bei Betätigung der Antriebsvorrichtung wird das Zahnrad gedreht, bis Mitnahmevorsprung und Mitnahmeeinsenkung wieder miteinander verrasten und damit die Grundstellung wieder erreicht ist.

Durch die in den Unteransprüchen aufgeführten Maßnahmen sind vorteilhafte Weiterbildungen und Verbesserungen des im Hauptanspruch angegebenen Kraftfahrzeug-Außenrückspiegels möglich.

### Zeichnung

Ein Ausführungsbeispiel der Erfindung ist in der Zeichnung dargestellt und in der nachfolgenden Beschreibung näher erläutert. Es zeigen Figur 1 eine Ansicht eines Kraftfahrzeug-Außenrückspiegels von oben, Figur 2 eine vergrößerte Schnittdarstellung durch ein zwischen Spiegelfuß und Spiegelträger vorhandenes Gelenk und eine dort angeordnete Antriebsvorrichtung, die sich in Betriebsstellung befindet, Figur 3 einen Teilbereich der Schnittdarstellung gemäß Figur 3 mit entkoppelter Antriebsvorrichtung, Figur 4 einen Teilbereich von Kupplungsmitteln zwischen dem Fußteil und dem Spiegelträger, in Ansicht und im Schnitt und Figur 5 ein ebenfalls Kupplungsmittel aufweisender Ring in Ansicht und im Schnitt.

### Beschreibung des Ausführungsbeispiels

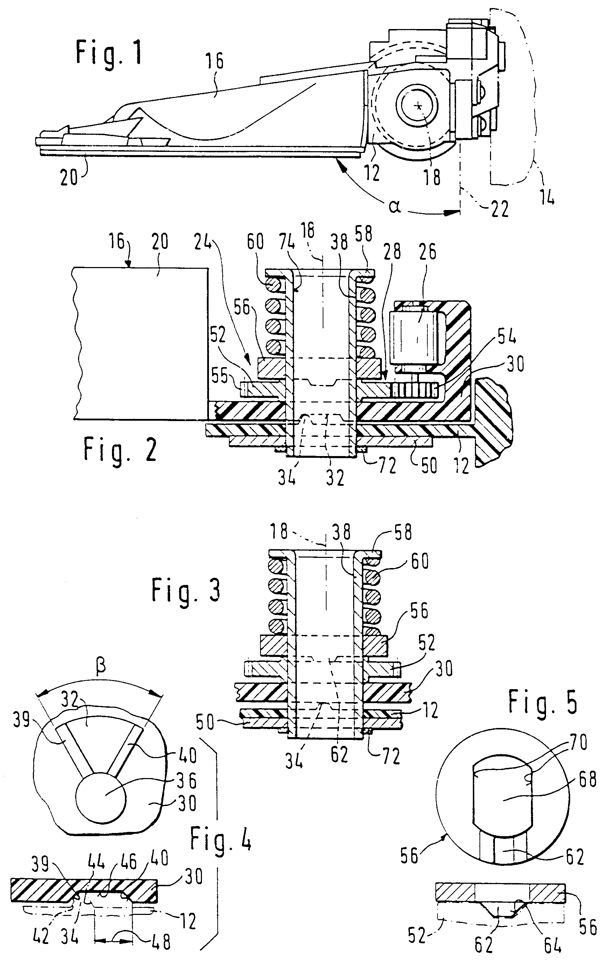

Ein in Figur 1 in einer Ansicht von oben dargestellten Kraftfahrzeug-Außenrückspiegel 10 ist mit einem Fußteil 12 an einer strichpunktiert dargestellten Kraftfahrzeugkarosserie 14 befestigt. An dem Fußteil 12 ist ein Spiegelträger 16 gelenkig befestigt. Die Gelenkachse ist in Figur 1 mit 18 bezeichnet. Der Spiegelträger 16 weist einen Spiegel 20 auf und ist um die Gelenkachse 18 über einen Klappwinkel α so klappbar, daß er in eine Position gelangt, die in Figur 1 durch eine mit der Bezugszahl 22 bezeichnete Linie markiert ist. In dieser sogenannten Beiklappstellung wird der Spiegelträger 16 beispielsweise dann gebracht, wenn das Kraftfahrzeug in eine automatische Waschanlage einfährt. Danach wird der Spiegelträger 16 wieder um den Winkel α und die dargestellte, von der Kraftfahrzeugkarosserie 14 entfernte Betriebsstellung gebracht. Diese Klappbewegung wird normalerweise durch eine Antriebsvorrichtung 24 erreicht, zu der ein elektrischer Antriebsmotor 26 gehört. Weiter gehört zur Antriebsvorrichtung 24 ein Untersetzungsgetriebe 28, das in Figur 2 als einfaches Stirnrad-Untersetzungsgetriebe dargestellt ist. In der Praxis wird dieses jedoch, alleine schon wegen der erforderlichen Selbsthemmung, als Schneckengetriebe ausgebildet sein. Es ist jedoch aber auch denkbar, daß das Untersetzungsgetriebe 28 aus einer Kombination von Schneckengetriebe und Stirnradgetriebe aufgebaut ist. Wie Figur 2 weiter zeigt weist der Spiegelträger 16 einen zur Antriebsvorrichtung 24 gehörenden Ansatz 30 auf, der sich parallel und benachbart zu dem in diesem Bereich teilweise plattenartigen Fußteil 12 erstreckt. In Figur 2 ist diese Anordnung so getroffen, daß der Ansatz 30 oberhalb des Fußteils 12 liegt. In Figur 4 ist eine Teilansicht von unten auf den Ansatz 30 dargestellt. In dem zugehörigen Teilschnitt, der lediglich die Schnittfläche zeigt, ist erkennbar, daß der Ansatz 30 eine ringsegmentförmige Vertiefung 32 hat, die in Richtung der Gelenkachse 18 in den Ansatz 30 eingesenkt ist. In diese Vertiefung 32 taucht ein Nocken 34 des Fußteils 12 ein, der in Richtung der Gelenkachse 18 aus dem Fußteil 12 ragt. Der in Figur 4 angedeutete Segmentwinkel β ist um die Breite des Nockens 34 größer als der Klappwinkel α, der in Figur 1 dargestellt ist. Die Vertiefung 32 erstreckt sich von einer in dem Ansatz 30 befindlichen Bohrung 36 aus, die zur Aufnahme eines bolzenformigen Bauteils 38 dient. Das bolzenförmige Bauteil 38 durchdringt den Ansatz 30 in der Bohrung 36 und ebenso den plattenförmigen Bereich des Fußteils 12 in einer dort vorhandenen Bohrung. Damit ist der Spiegelträger 16 um das bolzenartige Bauteil 38 und damit um die aufrechte Gelenkachse 18 klappbar. Das Zentrum der Segmentform der Vertiefung 32 ist identisch mit der Gelenkachse 18. Die sich im wesentlichen radial erstreckenden Seitenbegrenzungen der Vertiefung 32 bilden Endanschläge 39 und 40 für die Seitenwangen 42, 44 des streifenartigen Nockens 34, die mit den Endanschlägen 39, 40 als Gegenanschläge zusammenarbeiten. Die Schnittdarstellung gemäß Figur 4 zeigt den Nocken 34 in strichpunktierter Darstellung, der mit seiner Gegenarschlagfläche 42 an der Anschlagfläche 39 des Ansatzes 30 anliegt. Weiter zeigt Figur 4, daß die Endanschlagflächen 39, 40 der Vertiefung 32 vom Grund 46 der Vertiefung 32 aus divergieren. Dagegen konvergieren die Gegenanschlagflächen 42 und 44 des Nockens 34 vom Fußteil 12 ausgehend. Der Nocken 34 ist in Klapprichtung (Winkel α) gesehen um ein Maß 48 kleiner als das sich aus dem Winkel β ergebende Maß zwischen den Endanschlägen 39 und 40, das eine Klappbewegung α des Spiegelträgers 16 von etwa 90° gegenüber dem Fußteil 12 erlaubt. In der in Figur 1 mit 22 angedeuteten Beiklappstellung soll der Gegenanschlag 44 des Nockens 34 am Endanschlag 40 des Ansatzes 30 anliegen.

Weiter zeigt Figur 2, daß das bolzenartige Bauteil 38 an der vom Ansatz 30 des Spiegelträgers 16 abgewandten Seite des Fußteils 12 aus diesem ragt und eine Stützplatte 50 durchdringt, die drehfest mit dem bolzenartigen Bauteil 38 verbunden ist. Dazu weist das bolzenartige Bauteil im Bereich der Stützplatte 50 zumindest eine Mitnabmefläche auf. Auf der anderen, vom Fußteil 12 abgewandten Seite des Ansatzes 30 ist auf dem bolzenartigen Bauteil 38 ein Zahnrad 52 zunächst frei drehbar. Die Verzahnung 55 dieses Zahnrades kämmt mit einer Gegenverzahnung 54, die von dem am Ansatz 30 angeordneten elektrischen Antriebsmotor 26 angetrieben ist. Beim Ausführungsbeispiel ist die Gegenverzahnung 54 durch ein Ritzel dargestellt, was in der Praxis aber ohne weiteres durch beliebige andere Getriebebauteile ersetzbar ist. Auf der vom Ansatz 30 abgewandten Seite des Zahnrades 52 befindet sich ein Ring 56, der ebenfalls von dem bolzenartigen Bauteil 38 durchsetzt ist. Dieses Bauteil 38 erstreckt sich aus dem Ring 56 heraus über einen bestimmten Abschnitt und hat an seinem Ende einen Ringbund 58, an dem sich ein Ende einer vorgespannten Schrauben-Druckfeder 60 abstützt, die das bolzenförmige Bauteil 38 umgibt. Das andere Ende der Schraubenfeder 60 liegt an der von dem Zahnrad 52 abgewandten Stirnfläche des Rings 56 an und drückt diesen gegen die dem Ring 56 zugewandte Stirnfläche des Zahnrads 52. Wie insbesondere Figur 5 zeigt, weist der Ring 56 an seiner dem Zahnrad 52 zugewandten Stirnfläche einen Mitnahmevorsprung 62 auf, der passend in eine Mitnahmeeinsenkung 64 des Zahnrades 52 greift. Es ist ohne weiteres denkbar, anstelle des hier dargestellten Mitnahmevorsprungs 62 mehrere Mitnahmevorsprünge anzuordnen und diesen entsprechende Mitnahmeeinsenkungen zuzuordnen. Wie Figur 5 weiter zeigt, weist die Bohrung 68 des Mitnahmerings 56 Mitnahmeflächen 70 auf, die mit entsprechenden Drehmitnahmeflächen am Mantel des bolzenartigen Bauteils 38 im Sinne einer Drehmitnahme zusammenwirken. Sie sind identisch mit den Mitnahmeflächen für die Stützplatte 50. Damit dieser Aufbau in Richtung der Gelenkachse 18 gesichert ist, ist auf der freien Seite der Stützplatte 50 an dem dort herausragenden Endabschnitt des bolzenartigen Bauteils 38 ein Sicherungsring 72 angeordnet, dessen Anordnung so getroffen ist, daß die Schraubendruckfeder 60 stets unter Vorspannung steht. Zur Durchführung vom Stromversorgungskabel für den Antriebsmotor 26 ist das bolzenartige Bauteil 38 mit einer Längs-Durchgangsbohrung 74 versehen.

Wenn der Kraftfahrzeugaußenrückspiegel 10 aus seiner in Position 1 dargestellten Betriebsstellung in seine Beiklappstelllung 22 gebracht werden soll wird der elektrische Antriebsmotor 26 aktiviert. Da das Zahnrad 52 über den Mitnahmevorsprung 62 und die Mitnahmeeinsenkung 64 bis zu einem gewissen Grade drehfest mit dem Ring 56 verbunden ist und dieser seinerseits drehfest auf dem bolzenähnlichen Bauteil 38 angeordnet ist, wälzt sich die Gegenverzahnung 54 auf der Verzahnung 55 des Zahnrades 52 ab und schwenkt den Spiegelträger 16 um die Gelenkachse 18.

Wenn jedoch auf den Spiegelträger 16 eine Kraft ausgeübt wird, die im Sinne einer der Klappbewegungen wirkt und von außen auf den Spiegelträger aufgebracht wird, gelangen je nach Kraftrichtung der Mitnahmevorsprung 62 aus der Mitnahmeeinsenkung 64 und/oder der Nocken 34 aus der segmentartigen Vertiefung 32 (Fig. 3). Dies erfolgt gegen die Kraft der Schrauben-Druckfeder 60 und wird dadurch begünstigt, daß in Klapprichtung gesehen, sowohl der Mitnahmevorsprung 62 als auch die Mitnahmeeinsenkung 64 genauso wie der Nocken 64 und die Vertiefung 32 derart schräg gestellte Endwände aufweisen, daß eine Entkopplung der so gebildeten Kupplungsmittel 62, 64 bzw. 34, 32 erfolgen kann. Eine solche Situation ist in Figur 3 dargestellt. Dort ist ersichtlich, daß der Mitnahmevorsprung 62 des Rings 56 auf der ihm zugewandten Stirnfläche des Zahnrades 52 aufsitzt. Weiter ist erkennbar, daß die obere Endfläche des Nockens 34 aus der Vertiefung 32 gelangt ist und an der ihm zugewandten Oberfläche des Ansatzes 30 aufsitzt. Die willkürlich von außen auf den Rückspiegel 10 einwirkende Kraft konnte also keine Beschädigungen anrichten. Um den Kraftfahrzeug-Außenrückspiegel 10 nun wieder betriebsfähig zu machen und in seine in Figur 1 dargestellte Arbeitsposition zu bringen wird der elektrische Antriebsmotor 26 in Gang gesetzt. Nun dreht die Gegenverzahnung 54 das Zahnrad 52 so lange frei auf dem bolzenartigen Bauteil 38, bis die Mitnahmevertiefung 64 im Zahnrad den Mitnahmevorsprung 62 des drehfesten Rings 56 fängt. Danach erfolgt wie schon oben beschrieben eine Verschwenkung des Spiegelträgers 16 gegenüber dem Fußteil 12, bis der Nocken 34 wieder in seine Vertiefung 32 gelangt. Je nach Bedarf wird dann der Nocken 34 mit seinen Gegenanschlägen 42 oder 44 an einem der Endanschläge 38 oder 40 des Ansatzes 30 angelegt. Die Vorspannung der Schraubendruckfeder 60 ist so ausgelegt, daß sie die Antriebsvorrichtung 34 bei Normalbetrieb ordnungsgemäß zusammenhält und daß auch die normalen, während des Betriebs auftretenden Kräfte ordnungsgemäß übertragen werden. Bei den schon beschriebenen, von außen im Sinne einer der Klappbewegungen auf den Spiegelträger einwirkenden Kraft gelangen die Kupplungsmittel 32, 34 bzw. 62, 64 gegen die Wirkung der Schraubendruckfeder 60 außer Eingriff, so daß Beschädigungen der Antriebsvorrichtung 24 und des gesamten Kraftfahrzeugaußenrückspiegels vermieden werden.

Es versteht sich von selbst, daß der Nocken 34 auch an dem Ansatz 30 und die Vertiefung 32 mit ihren Seitenbegrenzungen 39, 40 an dem Fußteil 12 angeordnet werden können. Das gleiche gilt für eine Anordnung des Mitnahmevorsprungs am Zahnrad 52 und die der Mitnahmeeinsenkung 64 am Ring 56.

## Patentansprüche

1. Kraftfahrzeug-Außenrückspiegel mit einem karosseriefesten Fußteil, an dem ein Spiegelträger gelenkig angeordnet ist, der frei um diese zur Spiegelebene im wesentlichen parallele aufrechte Gelenkachse klappbar der Fahrzeugkarosserie annäherbar und von dieser entfernbar ist und mit einer elektromotorischen, ein Untersetzungsgetriebe aufweisenden Antriebsvorrichtung zum Erzeugen der Klappbewegung des Spiegelträgers, der über Kupplungsmittel (62, 64 bzw. 32, 34) mit der Antriebsvorrichtung wirkverbunden ist, welche bei einer von außen auf den Spiegelträger im Sinne einer der Klappbewegungen einwirkenden Kraft außer Eintritt gelangen, wobei die als bolzenartiges Bauteil (38) ausgebildete Gelenkachse ein mit dem Bauteil drehfest verbundenes Stützelement (50) sowie das Fußteil (12) und den Ansatz (30) durchdringt und auf der von dem Fußteil abgewandten Seite des Ansatzes ein Zahnrad (52) frei drehbar gelagert ist, dessen Verzahnung mit einer Gegenverzahnung kämmt, die von einem am Ansatz (30) angeordneten, elektrischen Antriebsmotor angetrieben ist, dadurch gekennzeichnet, daß auf der von dem Ansatz (30) abgewandten Stirnseite des Zahnrades (52) ein von dem Bauteil (38) durchdrungener, mit diesem drehfest verbundener Ring (56) angeordnet ist, der durch vorgespannte Federmittel (60) gegen das Zahnrad (52) gedrückt ist und daß der Ring (56) wenigstens eine Mitnahmeschulter aufweist, der eine Gegenmitnahmeschulter am Zahnrad (52) zugeordnet ist.

2. Kraftfahrzeug-Außenrückspiegel nach Anspruch 1, dadurch gekennzeichnet, daß die Mitnahmeschulter an einem Mitnahmevorsprung (62) des Rings (56) und die Gegenmitnahmeschulter an einer den Vorsprung passend aufnehmenden Mitnahmeeinsenkung (64) des Zahnrades (52) angeordnet sind.

3. Kraftfahrzeug-Außenrückspiegel nach einem der Ansprüche 1 oder 2, dadurch gekennzeichnet, daß das bolzenartige Bauteil (38) mit Abstand von dem Ring (56) an seinem ringseitigen Ende einen Ringbund (58) aufweist, an dem sich ein vorgespanntes, das Bauteil umgebende, an dem Ring (56) aufsitzende Schraubendruckfeder abstützt, daß das Bauteil (38) mit seinem anderen Ende aus der Abstützplatte (50) ragt und mit einem an der Abstützplatte anliegenden Element (72) zur Sicherung gegen axiales Verschieben versehen ist.
